Europäisches Patentamt

**European Patent Office**

**Office européen des brevets**

(19)

(11) Numéro de publication : **0 158 562 B1**

(12) FASCICULE DE BREVET EUROPÉEN

(45) Date de publication du fascicule du brevet :
10.02.88

(21) Numéro de dépôt : 85400591.5

(22) Date de dépôt : 26.03.85

(51) Int. Cl.⁴ : **A 47 C 7/46**, B 60 N 1/06

(54) Dispositif de réglage local de la tension d'une nappe élastique, notamment pour siège de véhicule.

(30) Priorité : 27.03.84 FR 8404762

(43) Date de publication de la demande :
16.10.85 Bulletin 85/42

(45) Mention de la délivrance du brevet :
10.02.88 Bulletin 88/06

(84) Etats contractants désignés :
AT BE CH DE GB IT LI LU NL SE

(56) Documents cités :
DE-A- 1 755 229
DE-A- 1 914 154
DE-A- 2 603 980
DE-B- 1 249 102
DE-B- 1 274 003
GB-A- 1 020 399
GB-A- 1 272 929
US-A- 3 378 299

(73) Titulaire : **CYCLES PEUGEOT Société dite:**
**Beaulieu**
**F-25700 Valentigney (FR)**

(72) Inventeur : **Fourrey, François**
**34 rue du Petit Chenois**
**F-25200 Montbeliard (FR)**
Inventeur : **Ciciliani, Patrice**
**10, rue Cuvier**
**F-25230 Seloncourt (FR)**

(74) Mandataire : **Moncheny, Michel et al**
**c/o Cabinet Lavoix 2 Place d'Estienne d'Orves**
**F-75441 Paris Cedex 09 (FR)**

Jouve, 18, rue St-Denis, 75001 Paris, France

## Description

Les utilisateurs de voitures automobiles n'hésitent plus aujourd'hui à parcourir de grandes distances. Malheureusement il en résulte souvent une fatigue physique importante et notamment des douleurs dues au tassement des vertèbres occasionné par le maintien prolongé dans une même position.

Il est connu (DE-B-1 249 102) de monter derrière le rembourrage du dossier d'un siège de véhicule au moins un ressort d'appui transversal, recourbé sur lui-même, dont les extrémités peuvent être rapprochées ou éloignées pour modifier la courbure du ressort et régler la tension du rembourrage. Toutefois, l'accroissement de la tension s'accompagne d'une réduction de la surface d'appui du ressort ce qui est inconfortable pour l'utilisateur.

La présente invention a pour but de remédier à cet état de choses en proposant un dispositif de réglage local de la tension d'une nappe élastique, tout particulièrement adapté au réglage du dossier d'un siège de véhicule, qui permette de modifier la fermeté de l'appui fourni par la nappe élastique localement, de manière régulière sur toute la largeur de la nappe, et ainsi de limiter la fatigue de l'utilisateur.

Cette invention a en effet pour objet un dispositif de réglage de la tension d'une nappe élastique, comportant un ressort de forme sinusoïdale, dans lequel les extrémités du ressort sont solidaires, chacune, de deux surfaces parallèles entre lesquelles est enfermé un disque rotatif, les deux disques étant solidaires en rotation mais inclinés en sens inverse, de sorte que leur rotation fait pivoter en sens inverse les surfaces parallèles des deux extrémités du ressort et provoque une modification de la longueur et de la courbure de ce dernier, de part et d'autre d'une position de repos.

Ainsi, selon la position des disques rotatifs, le ressort plat est déplacé entre une position extrême tendue de raidissement et une position extrême comprimée fléchie, correspondant à une souplesse maximale. Entre ces deux positions le ressort au repos est plat sans courbure, ce qui lui laisse son élasticité normale.

Le ressort plat peut facilement être associé à une nappe élastique à laquelle il transmet la tension ou le fléchissement qui lui est imposé par les disques.

De préférence le ressort est un ressort sinusoïdal plat, du même type que ceux qui constituent la nappe élastique.

Les disques rotatifs sont montés sur une tige de commande dont ils sont solidaires en rotation et sur laquelle ils sont inclinés.

Un tel dispositif est tout particulièrement adapté au réglage de l'appui dans un siège de véhicule automobile. Il est, dans ce cas, monté de préférence dans la zone d'appui lombaire, la tige de commande étant fixée sur les montants de l'armature du siège.

Bien entendu la nappe élastique peut aisément comporter plusieurs dispositifs de réglage permettant de modifier localement sa tension selon les besoins.

La description d'un mode de réalisation donné à titre d'exemple non limitatif, et représenté aux dessins annexés, fera d'ailleurs ressortir les avantages et caractéristiques de l'invention.

Sur ces dessins :

- la fig. 1 est une vue de face des extrémités d'un dispositif suivant l'invention, en position de repos ;

- la fig. 2 est une vue de dessus du dispositif de la figure 1 ;

- la fig. 3 est une vue schématique de dessous, du dispositif en position de fléchissement ;

- la fig. 4 est une vue schématique du dispositif de la figure 3 dont le ressort a été supprimé ;

- la fig. 5 est une vue analogue à la figure 3 du dispositif en position de raidissement ;

- la fig. 6 est une vue analogue à la figure 4 montrant la position des disques lors du raidissement du ressort ;

- les fig. 7, 8 et 9 montrent les positions des disques de commande, respectivement dans les positions correspondant aux figures 1, 3 et 5 ;

- la fig. 10 montre, en perspective, une portion de la nappe élastique du dossier d'un siège de véhicule muni d'un dispositif de réglage selon l'invention.

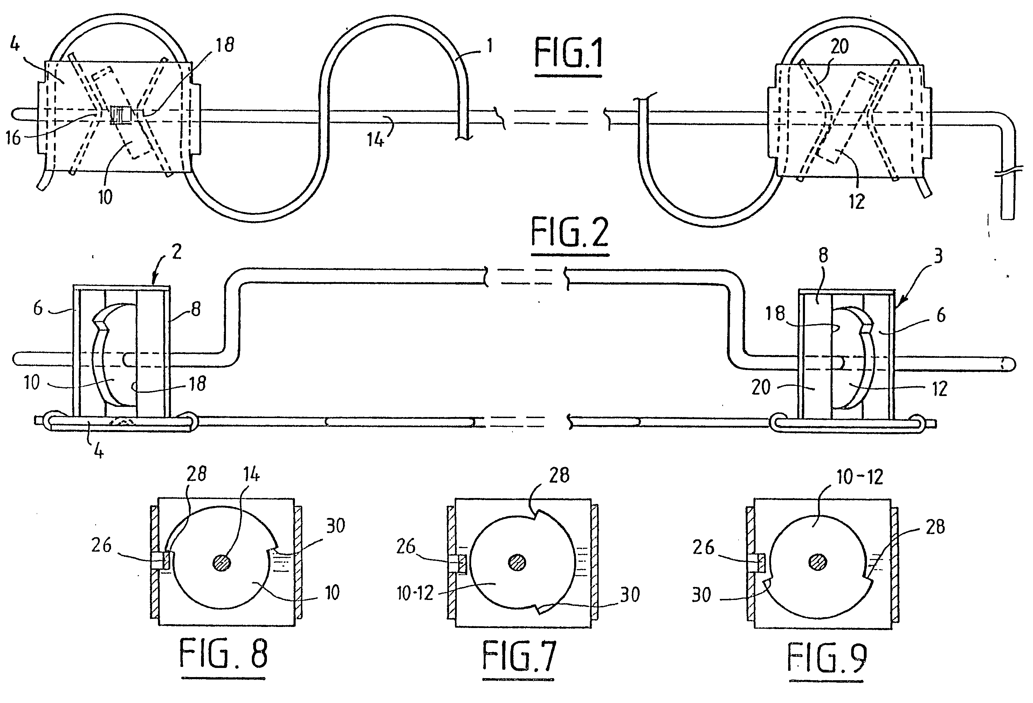

Comme le montrent les dessins, le dispositif selon l'invention comporte un ressort plat 1, de préférence en forme de sinusoïde, dont les deux extrémités portent chacune un boîtier 2, 3, fixé par une plaque 4 sur le ressort et enfermant entre ses parois latérales opposées, respectivement 6 et 8, un disque 10, 12. Les deux disques 10 et 12 sont fixés sur une tige 14, sur laquelle ils sont inclinés en sens inverse comme le montre clairement la figure 1. Les deux disques 10 et 12 sont identiques et sont ainsi placés de manière symétrique par rapport au plan médian de la tige 14.

Dans la position de repos, c'est-à-dire la position représentée sur les figures 1 et 2, les disques 10 et 12 ne sont pas en contact avec les parois 6, 8 des boîtiers, de sorte qu'ils n'exercent aucun effort contre ces parois. En fait les parois 6 et 8 ont la forme de V couchés dont les sommets 16, 18 sont en regard et délimitent par suite un passage étroit, d'une largeur simplement légèrement supérieure à l'épaisseur des disques 10, 12. L'inclinaison des flancs 20 des V des parois 6 et 8 correspond sensiblement à l'inclinaison, sur la tige 14, des disques 10, 12 qui se trouvent ainsi simplement interposés entre les deux parois latérales du boîtier correspondant.

Chacune des parois 6, 8 est percée d'une ouverture 22 permettant le libre passage de la tige 14 et même la rotation de cette dernière sans entraînement des V des parois 6 et 8.

En conséquence, lorsque la tige 14 qui, de préférence, est munie d'une poignée de

commande 24 — qui n'a pas été représentée sur les figures 1 à 6 — tourne autour de son axe en entraînant les disques 10 et 12, ceux-ci frottent sur les sommets 16, 18 des parois latérales 6, 8 et tendent à repousser les deux parois de chaque boîtier en sens inverse. Les boîtiers pivotent sur la tige 14 pour converger soit en direction du ressort 1, soit dans la direction opposée.

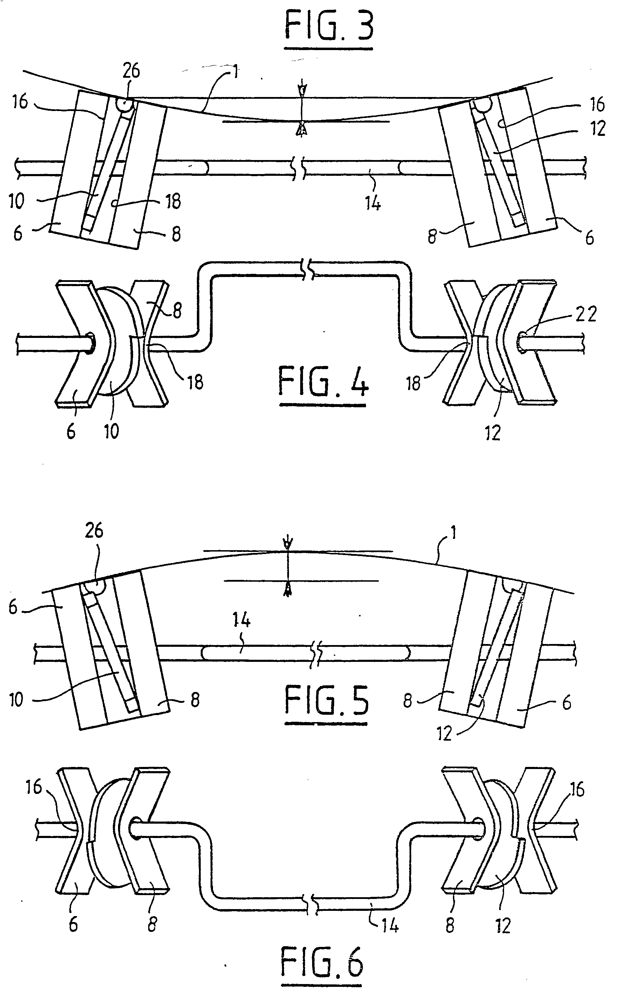

Par exemple, si la tige 14 tourne dans le sens des aiguilles d'une montre, en considérant la figure 1, les disques 10 et 12 prennent peu à peu la position représentée sur les figures 3 et 4, c'est-à-dire tendent à rapprocher l'une de l'autre les parois 8 à leur extrémité fixée au ressort 1, tandis qu'ils repoussent vers l'extérieur l'extrémité des parois 6 opposée au ressort 1. Ceci provoque un fléchissement du ressort 1 en direction de la tige 14, en même temps qu'un raccourcissement de ce ressort.

Bien entendu, le ressort 1 ainsi recourbé présente une souplesse accrue. Inversement, si la tige 14 est tournée en sens inverse des aiguilles d'une montre, les disques 10 et 12 prennent les positions représentées sur les figures 5 et 6. Dans ce cas, chacun des disques repousse vers l'extérieur la paroi 6 à son extrémité fixée au ressort 1, tandis que les deux disques rapprochent entre elles les extrémités des parois 8 opposées à ce ressort 1. Le ressort est, par suite, tendu et allongé tout en prenant une courbure dont la concavité se trouve en regard de la tige 14. L'allongement du ressort le raidit et réduit son élasticité.

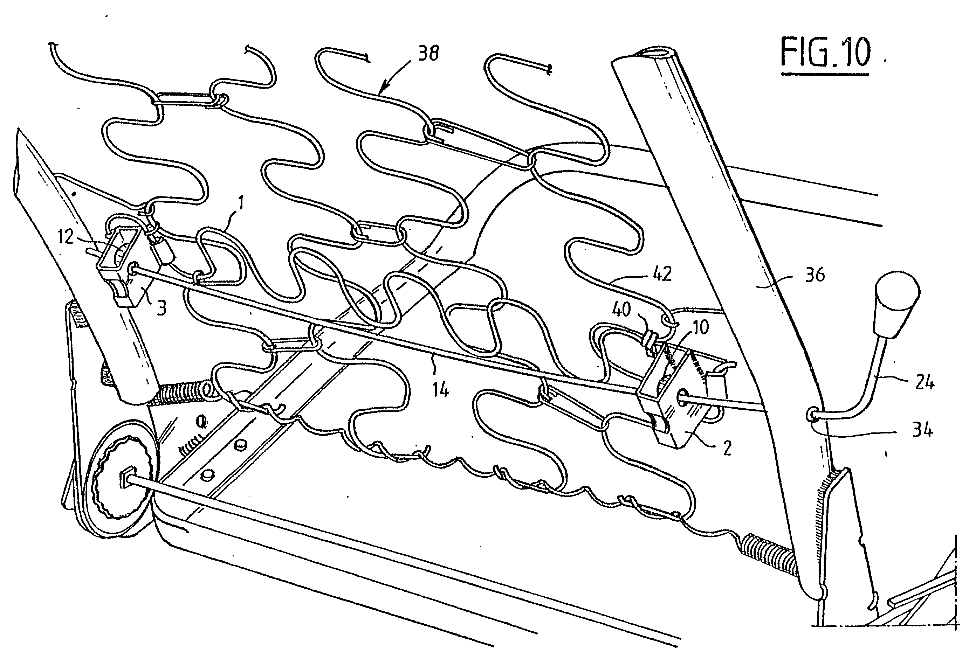

De préférence, chacun des boîtiers 2 et 3 comporte sur la plaque 4 de fixation au ressort 1 une saillie 26 tandis que les disques 10 et 12 forment deux dents, respectivement 28 et 30, tournées en sens inverse. La coopération des dents 28 et 30 avec la saillie 26 limite le déplacement du disque correspondant 10 ou 12 et, par suite, signale l'arrivée de ce disque dans sa position extrême. En effet, lorsque le dispositif est dans la position inactive représentée sur les figures 1 et 2, chacun des disques est dans la position montrée sur la figure 7. La saillie 26 du boîtier est sensiblement à égale distance de chacune des dents 28 et 30. Par suite, la tige peut sans difficulté tourner dans l'un ou l'autre sens en entraînant les disques fixés sur elle. Selon le sens de rotation de la tige 14, la dent 28 se rapproche de la saillie 26 et vient en butée sur elle (fig. 8), ou la dent 30 se rapproche de la saillie 26 et vient buter sous elle (fig. 9).

Dans chacune de ces deux dernières positions, le disque 10, 12 a légèrement dépassé sa position instable et tend, par suite, à atteindre la position stable suivante constituée par la position décalée de 180° par rapport à la position stable initiale représentée sur la figure 7, c'est-à-dire à continuer sa rotation. Le disque est donc solidement appuyé contre la saillie 26 et se bloque de lui-même dans la position qui lui a été donnée. Seule une rotation de la tige 14 peut provoquer un changement de position des disques 10 et 12 et du ressort 1.

Un tel dispositif permet, grâce à l'association du ressort 1 avec une nappe élastique, de modifier localement la tension de cette nappe en faisant varier la courbure et la longueur du ressort 1.

La nappe élastique peut être constituée de diverses manières et être utilisée dans un siège, un sommier, ou toute autre application. Le réglage est toutefois particulièrement important dans le cas de dossiers de sièges de véhicule, tels que celui représenté partiellement sur la figure 10.

Dans ce cas, la tige 14 est montée dans des trous 34 percés dans les montants verticaux 36 constituant l'armature du siège à laquelle est fixée la nappe élastique 38. Le dispositif est ainsi monté derrière la nappe élastique, le ressort 1 formant un élément transversal de cette nappe et étant fixé par des crochets en fil 40 aux ressorts longitudinaux de la nappe 38.

Le ressort 1 est ainsi en contact avec les différents ressorts. En position de repos du dispositif, le ressort 1 n'a aucune action sur les ressorts de la nappe élastique. Par contre, lorsqu'il est raidi sous l'action des disques 10 et 12 et parvenu dans la position des figures 5 et 6, il tend les ressorts 42 de la nappe 38 et assure un raidissement du dossier au point où il se trouve. Inversement, lorsqu'il est raccourci et fléchit en sens inverse, il donne à l'ensemble de la nappe une élasticité supplémentaire.

De préférence, un dispositif de réglage du type ci-dessus sera monté dans la zone de l'appui lombaire qui est la zone la plus sujette à un tassement de vertèbres lors de l'utilisation d'un siège de véhicule. Il est toutefois bien entendu que ce dispositif de réglage peut facilement être monté dans toute autre position et même que plusieurs dispositifs de réglage peuvent être montés sur un même dossier de siège, l'utilisateur pouvant ainsi régler à tout moment la fermeté de l'appui qu'il rencontre et la faire varier chaque fois qu'il le désire.

De même, la tige 14 peut être rectiligne comme représenté sur la figure 10, ou être recourbée dans sa partie centrale comme le montrent les figures 1 à 6, ou même avoir toute autre forme lui permettant de provoquer la rotation des disques 10 et 12 et la déformation du ressort 1 sans influencer l'action de la nappe élastique 38 elle-même.

**Revendications**

1. Dispositif de réglage local de la tension d'une nappe élastique, notamment pour dossier de siège de véhicule comportant un ressort plat de forme sinusoïdale (1) caractérisé en ce que les extrémités du ressort plat (1) sont solidaires chacune de deux surfaces parallèles (16, 18), entre lesquelles est enfermé un disque rotatif (10, 12), les deux disques étant solidaires en rotation mais inclinés en sens inverse, de sorte que leur rotation fait pivoter en sens inverse les surfaces parallèles des deux extrémités du ressort (1) et provoque une modification de la longueur et de la courbure de ce dernier de part et d'autre d'une position de repos.

2. Dispositif suivant la revendication 2, caractérisé en ce que les disques rotatifs (10, 12) sont fixes sur une même tige (14) et sont inclinés en sens inverse sur l'axe de cette tige.

3. Dispositif suivant l'une des revendications précédentes, caractérisé en ce que la distance entre les surfaces parallèles (16, 18) est telle qu'en position de repos le disque est libre entre elles et qu'il les repousse en sens opposé dès qu'il est mis en rotation.

4. Dispositif suivant l'une des revendications précédentes, caractérisé en ce que les surfaces parallèles sont formées par les parties centrales de deux parois latérales (6, 8) en V couché dont les sommets sont dirigés l'un vers l'autre.

5. Dispositif suivant la revendication 4, caractérisé en ce que les parois en V (6, 8) sont reliées entre elles et forment un boîtier de logement du disque (10, 12).

6. Dispositif suivant la revendication 4, caractérisé en ce que les flancs (20) des parois en V ont des inclinaisons qui correspondent à l'angle d'inclinaison des disques (10, 12), de sorte qu'en position de repos le disque est parallèle à ces flancs.

7. Dispositif suivant l'une des revendications précédentes, caractérisé en ce que chaque disque comporte deux dents (28, 30) coopérant avec une butée (26) d'arrêt de sa rotation en position d'allongement ou de raccourcissement du ressort (1).

8. Nappe élastique, et notamment dossier de siège de véhicule, comportant au moins un dispositif de réglage suivant l'une des revendications 1 à 7, caractérisée en ce que l'armature latérale (36) de la nappe comporte des moyens de support des disques (10, 12), tandis que le ressort plat (1) est lié à ses extrémités à des éléments élastiques (42) de la nappe et est en contact avec l'ensemble de ces éléments, de sorte que son allongement les raidit localement tandis que son raccourcissement les assouplit.

9. Nappe suivant la revendication 8, caractérisée en ce que les montants latéraux de l'armature sont percés de trous (34) de réception de la tige (14) de commande du dispositif.

10. Nappe suivant l'une des revendications 8 et 9, caractérisée en ce que le dispositif est monté dans la zone d'appui lombaire.

11. Nappe suivant l'une des revendications 8 à 10, caractérisée en ce qu'elle comporte plusieurs dispositifs de réglage susceptibles d'être commandés indépendamment.

## Claims

1. A device for locally adjusting the tension in an elastic sheet, in particular for a vehicle seat back, comprising a flat spring of sinusoidal shape (1), characterised in that the ends of the flat spring (1) are each integral with two parallel surfaces (16, 18) between which a rotary disc (10, 12) is enclosed, the two discs being rotationally engaged but inclined in opposite directions so that their rotation causes the parallel surfaces of the two ends of the spring (1) to pivot in opposite directions and causes modification of the length and curvature thereof on either side of a rest position.

2. A device according to claim 1, characterised in that the rotary discs (10, 12) are fixed on a common rod (14) and are inclined in opposite directions relative to the axis of this rod.

3. A device according to one of the preceding claims, characterised in that the distance between the parallel surfaces (16, 18) is such that, in the rest position, the disc is free between them and pushes them back in opposite directions once it has been set into rotation.

4. A device according to one of the preceding claims, characterised in that the parallel surfaces are formed by the central portions of two lateral walls (6, 8) arranged as a V on its side, the apices of which face one another.

5. A device according to claim 4, characterised in that the V-shaped walls (6, 8) are joined together and form a casing for housing the disc (10, 12).

6. A device according to claim 4, characterised in that the flanks (20) of the V-shaped walls have inclinations corresponding to the angle of inclination of the discs (10, 12) so that the disc is parallel to these flanks in the rest position.

7. A device according to one of the preceding claims, characterised in that each disc comprises two teeth (28, 30) cooperating with an abutment (26) which stops its rotation in the extended or shortened position of the spring (1).

8. An elastic sheet, and in particular for a vehicle seat back, comprising at least one adjusting device according to one of claims 1 to 7, characterised in that the lateral reinforcement (36) for the sheet comprises means for supporting the discs (10, 12), whereas the flat spring (1) is connected at its ends to elastic elements (42) of the sheet and is in contact with all these elements so that extension of the spring stiffens them locally whereas shortening of the spring makes them more flexible.

9. An elastic sheet according to claim 8, characterised in that the lateral uprights of the reinforcement are perforated by holes (34) for receiving the rod (14) for controlling the device.

10. An elastic sheet according to one of claims 8 and 9, characterised in that the device is mounted in the lumber support region.

11. An elastic sheet according to one of claims 8 to 10, characterised in that it comprises several adjusting devices capable of being controlled independently.

## Patentansprüche

1. Vorrichtung zur lokalen Einstellung der Spannung einer elastischen Matte, insbesondere für Rückenlehnen von Kraftfahrzeugsitzen, mit einer flachen sinusförmigen Feder, dadurch gekennzeichnet, daß die Enden der flachen Feder (1) jeweils mit zwei parallelen Flächen (16, 18) verbunden sind, zwischen denen eine drehbare Scheibe (10, 12) eingeschlossen ist, wobei die beiden Scheiben drehfest und in umgekehrter Richtung geneigt sind, derart, daß ihre Drehung die parallelen Flächen der beiden Enden der Feder (1) in umgekehrter Richtung verdreht und eine Änderung der Länge und der Krümmung zu beiden Seiten einer Ruhestellung bewirkt.

2. Vorrichtung nach Anspruch 1, dadurch gekennzeichnet, daß die drehbaren Scheiben (10, 12) auf derselben Stange (14) befestigt sind und in entgegengesetzten Richtungen bezüglich der Achse dieser Stange geneigt sind.

3. Vorrichtung nach einem der vorstehenden Ansprüche, dadurch gekennzeichnet, daß der Abstand zwischen den parallelen Oberflächen (16, 18) derart ist, daß in der Ruhestellung die Scheibe lose zwischen den beiden parallelen Flächen liegt und die beiden Flächen in entgegengesetzter Richtung verschoben werden, sobald die Scheibe gedreht wird.

4. Vorrichtung nach einem der vorstehenden Ansprüche, dadurch gekennzeichnet, daß die parallelen Oberflächen aus den mittleren Teilen zweier Seitenwandungen (6, 8) gebildet werden, die jeweils die Form eines liegenden V haben, deren Spitzen jeweils aufeinanderzu angeordnet sind.

5. Vorrichtung nach Anspruch 4, dadurch gekennzeichnet, daß die V-förmigen Wandungen (6, 8) untereinander verbunden sind und ein Lagergehäuse für die Scheiben (10, 12) bilden.

6. Vorrichtung nach Anspruch 4, dadurch gekennzeichnet, daß die Flanken (20) der V-förmigen Wandungen Neigungen haben, die dem Neigungswinkel der Scheiben (10, 20) entsprechen, derart, daß in Ruhestellung die Scheibe parallel zu diesen Flanken verläuft.

7. Vorrichtung nach einem der vorstehenden Ansprüche, dadurch gekennzeichnet, daß jede Scheibe zwei Zähne (28, 30) aufweist, die mit einem Drehanschlag (26) zusammenwirken, der die Drehung in Ruhestellung oder in einer Stellung in deren die Feder (1) verkürzt ist, stoppt.

8. Elastische Matte, insbesondere Rücklehne von Autositzen, mit mindestens einer Einstellvorrichtung nach einem der Ansprüche 1 bis 7, dadurch gekennzeichnet, daß die seitliche Verstärkung (36) der Matte Mittel zum Tragen der Scheiben (10, 12) aufweist, wobei die flache Feder (1) an seinen Enden mit elastischen Elementen (42) der Matte verbunden ist und mit der Gesamtheit dieser Elemente derart in Berührung steht, daß ihre Verlängerung die elastischen Elemente lokal versteift, während ihre Verkürzung diese weicher werden läßt.

9. Matte nach Anspruch 8, dadurch gekennzeichnet, daß die seitlichen Streben des Rahmens mit Löchern zur Aufnahme der Steuerstange (14) der Vorrichtung versehen sind.

10. Matte nach einem der Ansprüche 8 und 9, dadurch gekennzeichnet, daß die Vorrichtung in der Lendenandruckzone angeordnet ist.

11. Matte nach einem der Ansprüche 8 bis 10, dadurch gekennzeichnet, daß sie mehrere Einstellvorrichtungen aufweist, die unabhängig voneinander steuerbar sind.

FIG.1

4  18

1

FIG.1

16  10

FIG.2

20

12

FIG.2

2

6  8

10  18

8  3

18  6

20  12

4

28  14

28

10-12

26  30

26  30

26  28

10  10-12  30  30

FIG. 8

FIG.7

FIG.9

0 158 562

FIG. 3

FIG. 4

FIG. 5

FIG.6

FIG.10

38

1

12

3

14

42

40

10

36

24

34

2

0 158 562